(19) Europäisches Patentamt
European Patent Office
Office européen des brevets

(11) **EP 3 151 178 A1**

(12) **EUROPEAN PATENT APPLICATION**

(43) Date of publication:
05.04.2017 Bulletin 2017/14

(51) Int Cl.:
*G06Q 10/06* (2012.01)    *G06Q 10/00* (2012.01)

(21) Application number: 16191257.1

(22) Date of filing: 29.09.2016

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 29.09.2015 IN 3695MU2015

(71) Applicant: **Tata Consultancy Services Limited Maharashtra (IN)**

(72) Inventors:
• PUVVALA, Abhinay
  411013 Pune, Maharashtra (IN)
• RAI, Veerendra Kumar
  411013 Pune, Maharashtra (IN)
• PATIL, Rutuja
  411013 Pune, Maharashtra (IN)

(74) Representative: **Goddar, Heinz J.**
**Boehmert & Boehmert**
**Anwaltspartnerschaft mbB**
**Patentanwälte Rechtsanwälte**
**Pettenkoferstrasse 20-22**
**80336 München (DE)**

(54) **SYSTEM AND METHOD FOR DETERMINING OPTIMAL GOVERNANCE RULES FOR MANAGING TICKETS IN AN ENTITY**

(57)    A method and system for determining optimal governance rules for managing tickets in an entity is provided. The system includes an agent based simulator to identify agents in an entity and to examine the interaction between the agents. The method includes considering a set of operational governance rules, contextual parameters and objectives of an entity. Further selecting one from each of the categories governance rules to form a combined rule set and calculating pay-off for each of the combined rule set. Further penalty is computed for each governor to evaluate the exploratory nature of the governor. Further by simulating pay-off and penalty, reward is computed to determine optimal governance rules for managing tickets in the entity.

FIG. 2

**Description**

CROSS REFERENCE TO RELATED APPLICATIONS AND PRIORITY

The present invention claims priority to Indian Provisional specification (Title : System and method for determination of optimal rules of governance for IT production service support) No. 3695/MUM/2015, filed in India on September 29, 2015.

TECHNICAL FIELD

The disclosure herein generally relate to governance rules, and more particularly, to system and method for determining optimal governance rules for managing tickets in an entity.

BACKGROUND

Entities ranging from large corporations to small businesses often institute numerous rules (policies), processes, and procedures to help manage the risks, business objectives, and compliance requirements associated with doing business. Generally, in an information technology (IT) service organization, governance refers to a mechanism for correction when an issue occurs in a project, a program or an engagement that is under execution. IT governance helps projects to meet the intended outcomes by resolving the issues as and when the issues arrive. Generally, issues are termed as tickets that are processed by a plurality of resources. The incoming tickets are generally processed in first come first serve. However, first come first serve is always not efficient as some tickets come with high priority.
Scope of the governance may include structural and organizational changes, communications and policies (rules) of the organization. The different categories of rules include assignment rules, pre-emption rules and escalation rules. The rules from different categories may be dependent on each other. Further, in the IT service organization, the rules are dynamic in nature and cannot be set a-priori.

SUMMARY

Embodiments of the present disclosure present technological improvements as solutions to one or more of the above-mentioned technical problems recognized by the inventors in conventional systems. For example, in one embodiment, a method for determining optimal governance rules for managing tickets in an organization is disclosed. The method includes receiving one or more tickets related to an issue in an entity. Further obtaining operational rules, contextual parameters and objectives of the entity. The operational rules includes three categories, namely assignment rules, pre-emption rules and escalation policies. Further, one rule from each category is selected and one or more combined rule sets are formed. Subsequently pay off for each of the combined rule sets is determined. An average combined rule set is determined that is compliant with Service Level Agreement (SLA) and a minimum effort spent by one or more resources. Further, penalty is calculated for each governor based on quantifier for varying exploratory nature of the governor (B), weightage for SLA compliance and efforts spent (L) and window size to determine exploratory nature of the governor. Furthermore, reward is computed for each of the one or more combined rule sets to determine an optimal governance rules by simulating the pay off and penalty.
In another embodiment, a system for thermal monitoring and providing advisory control for ladle operations is disclosed. The system includes at least one processor, and a memory communicatively coupled to the at least one processor, wherein the memory comprises of several modules. The modules include optimal governance rules module that receives one or more tickets related to an issue in an entity. Further, the system includes obtaining operational rules, contextual parameters and objectives of the entity. The operational rules includes three categories, namely assignment rules, pre-emption rules and escalation policies. Further, one rule from each category is selected and one or more combined rule sets are formed. Subsequently pay off for each of the combined rule sets is determined. An average combined rule set is determined that is compliant with SLA and a minimum effort spent by one or more resources. Further, penalty is calculated for each governor based on quantifier for varying exploratory nature of the governor (B), weightage for SLA compliance and efforts spent (L) and window size to determine exploratory nature of the governor. Furthermore, the system computes reward for each of the one or more combined rule sets to determine an optimal governance rules by simulating the pay off and penalty.
It is to be understood that both the foregoing general description and the following detailed description are explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a system for determining optimal governance rules for managing tickets in an entity, according to some embodiments of the present subject matter;
FIG. 2 is an illustration of agent based model depicting the agents in an entity, according to some embodiment of the present subject matter;
FIG. 3 illustrates a model for optimal governance rule determination from the database of rule sets under specified contextual parameters, according to some embodiment of the present subject matter;
FIG. 4 is a graphical representation illustrating observation of the changes in the Service Level Agreement (SLA) compliance while varying the exploratory nature of a governor, according to some embodiments of the present disclosure; and
FIG. 5 is a flow chart illustrating a method for determining optimal governance rules for managing tickets in an entity, according to some embodiment of the present subject matter.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.
The terms "rule" and "policy" are used interchangeably in the document.
In one aspect, a method for determining optimal governance rules for managing tickets in an entity is disclosed. The method consists of obtaining tickets related to an issue in an entity. Further obtaining the different categories of the rules, contextual parameters and the objectives of the entity. Different categories of rules include assignment rules, preemption rules and escalation rules. Subsequently, one rule from each of the category is combined to form combined rule set. Subsequently, pay-off is calculated for each of the combined policy set by simulating the policy sets. Further the exploratory nature of the governor is determined. The exploratory nature of the governor explains the governor's nature to try a new combined policy set. Subsequently, reward is computed by simulating the data for each of the combined policy sets and the penalty of the governors present in an entity to determine the optimal governance rules.
The manner in which the described system is implemented to evaluate reviewer's ability to provide feedback has been explained in detail with respect to the following figure(s). While aspects of the described system can be implemented in any number of different computing systems, transmission environments, and/or configurations, the embodiments are described in the context of the following exemplary system.

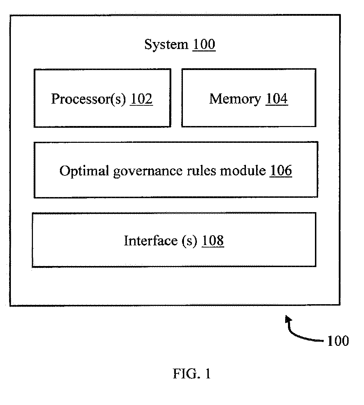

FIG. 1 schematically illustrates a system 100 for determining optimal governance rules for managing tickets of an entity, according to an embodiment of the present disclosure. As shown in FIG. 1, the system 100 includes one or more processor(s) 102 and a memory 104 communicatively coupled to each other. The memory 104 includes an optimal governance rules module 106 that determines optimal governance rules for managing tickets in an entity or entities. The system 100 also includes interface(s) 108. Although FIG. 1 shows example components of the system 100, in other implementations, the system 100 may contain fewer components, additional components, different components, or differently arranged components than depicted in FIG. 1.
The processor(s) 102 and the memory 104 may be communicatively coupled by a system bus. The processor(s) 102 may include circuitry implementing, among others, audio and logic functions associated with the communication. The processor 102 may include, among other things, a clock, an arithmetic logic unit (ALU) and logic gates configured to support operation of the processor(s) 102. The processor(s) 102 can be a single processing unit or a number of units, all of which include multiple computing units. The processor(s) 102 may be implemented as one or more microprocessors, microcomputers, microcontrollers, digital signal processors, central processing units, state machines, logic circuitries, and/or any devices that manipulate signals based on operational instructions. Among other capabilities, the processor(s) 102 is configured to fetch and execute computer-readable instructions and data stored in the memory 104.
The functions of the various elements shown in the figure, including any functional blocks labeled as "processor(s)", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional, and/or custom, may also be included.

The interface(s) 108 may include a variety of software and hardware interfaces, for example, interfaces for peripheral device(s), such as a keyboard, a mouse, an external memory, and a printer. The interface(s) 108 can facilitate multiple communications within a wide variety of networks and protocol types, including wired networks, for example, local area network (LAN), cable, etc., and wireless networks, such as Wireless LAN (WLAN), cellular, or satellite. For the purpose, the interface(s) 108 may include one or more ports for connecting the system 100 to other network devices.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory 104, may store any number of pieces of information, and data, used by the system 100 to determine optimal governance rules. The memory 104 may be configured to store information, data, applications, instructions or the like for system 100 to carry out various functions in accordance with various example embodiments. Additionally or alternatively, the memory 104 may be configured to store instructions which when executed by the processor 102 causes the system 100 to behave in a manner as described in various embodiments. The memory 104 includes the optimal governance rules module 106 and other modules. The module 106 include routines, programs, objects, components, data structures, etc., which perform particular tasks or implement particular abstract data types.

In an embodiment, the optimal governance rules module 106 determines the optimal governance rules from the available governance rules, contextual parameters and objectives of an entity. The governance rules includes three different categories assignment rules, preemption rules and escalation rules. The rules from each category is selected to form a combined policy set. Pay-off is calculated for each of the combined rule set and an average pay off is determined. Subsequently, penalty for each of the governor in an entity is determined to evaluate the exploratory nature of the governor. Subsequently, the average pay off and the penalty is computed and simulated to determine the reward. Simulated data of reward is utilized to determine the optimal governance rules.

In an embodiment, the present disclosure utilizes an agent based model for facilitating governance in an organization. The basic tenet of agent based model is to collect autonomous decision making agents that produce emergent behavior by interacting in an environment under a given set of rules.

A typical agent based model consists of an agent having certain attributes, rules/actions, goals and decisions to make. This heterogeneity thus created is an essential component of agent based model and helps replicate the real world more closely than other methods.

In an embodiment, the present disclosure utilizes Bonebeau's theory for identifying agents in the organization. Bonebeau's theory considers any entity that has independent behavior governed by very basic reactive decision rules to a complex and adaptive artificial intelligence.

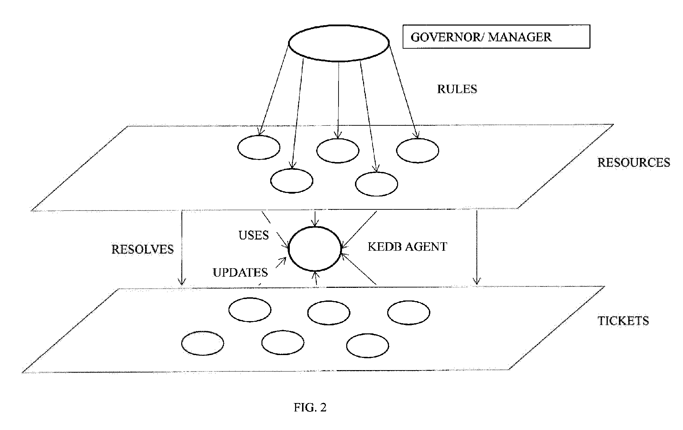

FIG. 2 is an illustration of agent based depicting the agents in an entity, according to an embodiment from a present disclosure. The different agents identified in the governance of an entity are tickets, resources, Known Error Database (KEDB) agent and governor. Ticket can be any one of event, incident, problem, access request and change request. Based on the business needs of an organization, tickets have to be handled within specified time as directed by the Service Level Agreements (SLAs). Typically, the SLA of a ticket is dependent on the ticket's priority. Priority is a composite of the urgency of the ticket (how soon the business needs a resolution) and impact of the ticket on the engagement (how many users are affected). The resolved tickets are stored in a repository for future reference.

In an example embodiment, the tickets are responded and resolved by resources. Response includes identifying, logging, categorizing, prioritizing, routing and conducting initial diagnosis of tickets. Whereas, Resolution is a relatively more complex task, involves doing the set of jobs needed for ticket closure and done at the level of support that corresponds to the tickets required resolution skills. Resources are characterized by a set of static and dynamics attributes. The examples for static attributes are tower, competency, cost, likelihood of absence, and the like. Whereas the examples of dynamic attributes are ticket, shift, net effort, and the like.

In an example embodiment, KEDB agent is a knowledge repository of tickets and the methods of ticket resolution. The KEDB agent stores how tickets are resolved and provides quicker diagnosis and resolution when they recur. Another agent in the agent based model is the governor. Governor makes the policy decision i.e., makes decision as what rules have to be executed on a given day. Hence, the governor explores various available options or rules for resolving the tickets.

In an embodiment, a method for determining optimal governance rules for the identified agents is disclosed. After the agents are identified in the agent based model, the agents are simulated for a given set of rules to examine the behavior of the interactions between agents.

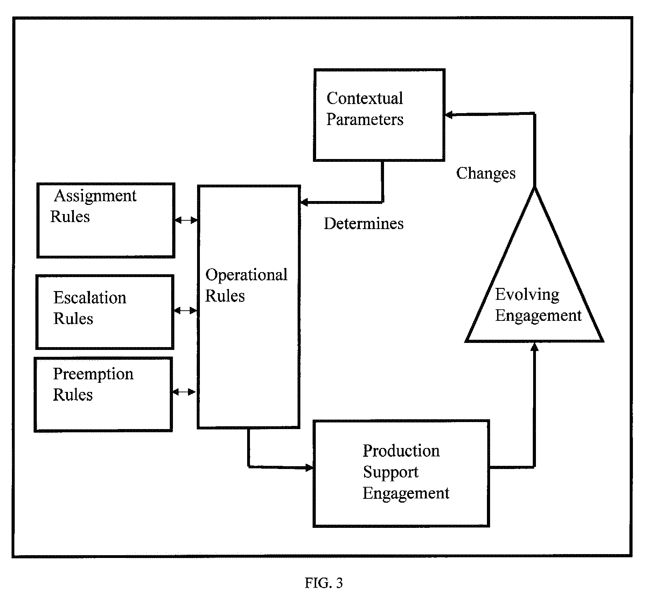

FIG. 3 illustrates a model for optimal governance rule determination from the database of rule sets under specified contextual parameters, in accordance with an example embodiment. In an embodiment, the rule set database comprises of three different sets of rules, namely, assignment rules, pre-emption rules and escalation rules. In an alternative embodiment the rule set database may also be pre-populated. The system determines the optimal rule set by receiving at least one rule, from each of the three set of rules to formulate the governance rules for a given service engagement. The optimal governance rules are in compliance with the objectives of the engagement in the specified contextual settings. The rules are further elaborated as follows:

- Assignment rule decides the order in which incoming tickets would be allocated to one or more resources and to which particular resource they are assigned to. The assignment of ticket to resource depends on various factors like type of ticket, the expertise level and competency required to resolve the ticket.
- Pre-emption rule decides on prioritizing of interruption for resolution of some tickets over others in a process at any given time. Further the interruption may be based upon the priority of ticket or SLA time of the ticket or both. Pre-emption rules may decide the way in which overhead caused by pre-emption should be (or can be) handled.
- Escalation rule decides the way in which functional or hierarchical escalation of a ticket should take place. Escalation rules also decides occurrences of any escalation if resources at certain support level are not able to resolve a given ticket. Escalation rules may also decide whether the escalation at a support level would take place after spending some effort of the ticket or without spending any effort on the ticket and the maximum percentage of escalation permitted at each support level.

Subsequently, each combine rule set is executed to determine pay off for each of the combined rule set. Payoff is a composite function of penalties due to SLA noncompliance and the aggregate effort spent by resources in that period. A policy with maximum SLA compliance while consuming minimum effort considered to have maximum payoff. Payoff is calculated based on the following formula.

$$X = (-L * (Penalty * n(tickets\ out\ of\ SLA)) + (-1 + L) * Total\ effort)$$

X is the pay-off of a particular combined rule set. L gives the priority of the ticket. L is used to alter the relative importance attached between effort/cost reduction and better SLA compliance levels and n is the number of combined rule sets available for simulation.

Payoff is computed for the available combined rule sets to determine an average pay off. Subsequently average payoff Xavg is determined for all the policy sets. Xavg is determined based on the window size. Xavg is the average of X over all the time periods in an active window.

Similarly, for each governor, penalty introduces the sensitivity to exploratory nature of the governor while making decisions. The formula for determining penalty for a governor is given below.

$$Penalty = B * ln(\sqrt{(t/t_i)})$$

B quantifies the exploratory behavior or risk taking nature of the policy maker. B at -1 indicates extreme exploitation, +1 indicates the extreme exploration. Exploitation promotes use of policies that are tried, tested and produced. Exploration strategy encourages the use of policies that have not been used recently in search higher rewards.t gives the total number of time periods and $t_i$ is the total number of times a particular policy was run.

Subsequently, reward for a given combined rule set for a given governor is determined.

$$Z = X_{avg} + Penalty$$

In an example embodiment, an experiment to simulate the data for a given entity is disclosed. A ticket workload log spanning 1 month is utilized for simulated the model. The total ticket inflow during this period was about 1,839 tickets spread over two supports towers of a large financial services provider.

The ticket log comprises other relevant information such as arrival times, priority, resolution time, effort time, time spent at each support layer, SLA compliance and reassignment reason. Some basic observations of the ticket log. In an experiment SLA violations and effort spent are considered for the experiment.

| Priority | Tower 1 | | | Tower 2 | | |
|---|---|---|---|---|---|---|
| | % | Violations | Average Effort | % | Violations | Average Effort |
| Critical | 2.97% | 8.46% | 28 min | 4.59% | 9.78% | 17 min |
| High | 41.47% | 6.37% | 146 min | 38.97% | 8.45% | 197 min |
| Medium | 40.60% | 5.43% | 3346 min | 42.64% | 6.66% | 2876 min |
| Low | 14.96% | 3.86% | 14547 min | 13.80% | 4.87% | 16543 min |

| Shift | Tower | Levels | Resources |
|---|---|---|---|
| 1 | 1 | (1,2,3) | (5,1,3) |
| | 2 | (1,2,3) | (3,3,1) |
| 2 | 1 | (1,2,3) | (5,1,3) |
| | 2 | (1,2,3) | (3,2,1) |
| 3 | 1 | (1,2,3) | (5,1,3) |
| | 2 | (1,2,3) | (2,3,1) |
| Cost | $432645 | SLA | 95.36% |

Parameters such as SLA compliance, cost of optimized resource set under multiple governor configurations are evaluated while observing the movement of optimal governance policy set.

| ID | Assignment Policies | ID | Pre-emption Policies |
|---|---|---|---|
| A1 | No fungibility | M1 | No Pre-emption |
| A2 | Fungibility across levels | M2 | Pre-emption based on Priority |
| A3 | Fungibility across both levels and towers | M3 | Pre-emption based on SLA expiry |
| **Combined Rule sets** | | | |

| P1 | P2 | P3 | P4 | P5 | P6 | P7 | P8 | P9 |
|---|---|---|---|---|---|---|---|---|
| A1,M1 | A1,M2 | A1,M3 | A2,M1 | A2,M2 | A2,M3 | A3,M1 | A3,M2 | A3,M3 |

Subsequently, the combined rule sets are simulated for the available governors to examine the performance. In an example, three governors are considered.

| | Configuration 1 | Configuration 2 | Configuration 3 |
|---|---|---|---|
| **Penalties ($)** | | | |
| Low | 6 | 10 | 6 |
| Medium | 8 | 12 | 7 |
| High | 15 | 14 | 9 |
| Critical | 20 | 15 | 11 |
| **Governor Parameters** | | | |
| A | 0.6 | 0.7 | 0.1 |
| B | -1.0 | 0.2 | 1.0 |
| Window | 7 days | | |

In an example of experiment, to evaluate these configurations and their impact on SLA compliance and effort reduction, a simulator based on the agent based model discussed has been developed in Netlogo. On top of the simulator is an optimizer that is built to produce the optimal resource configuration given a workload, SLA constraints and a set of governor's policy choices. Subsequently, SLA compliance and cost are determined for each of the three configurations of the three governors.

| Scenario | SLA Compliance | Cost ($) |
|---|---|---|
| Configuration 1 | 95.98% | **428617** |
| Configuration 2 | 94.43% | 4273403 |
| Configuration 3 | 96.87% | **441667** |

Further, governor's exploratory nature is determined by simulating the SLA compliance and cost on all the combined rule sets (configurations). To determine the exploratory nature of the governor, sensitivity analysis is performed by varying B across the two extremes of exploration and exploitation to understand its impact on SLA compliance and cost objectives. The spectrum of B is divided between -1 to 1 into a set of 21 values spaced with a difference of .1. To derive the relation between B and Cost, the simulation is run for each of these values of B with different resource configurations (number of resources at each level, tower) before zeroing in on the configuration that satisfies SLA constraints with minimum cost. The optimizer that was built to work on the results generated from the simulator outputs the minimum cost.

The second part of the sensitivity analysis is to derive the relation between B and SLA compliance. To conduct this experiment, the resources is kept constant while varying the parameter B to observe the changes in SLA compliance.

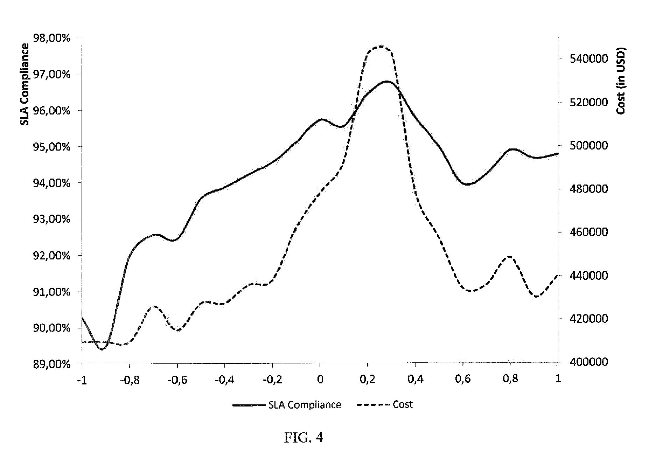

FIG. 4 is a graphical representation illustrating observation of the changes in the SLA compliance while varying B, according to some embodiments of the present disclosure. It is interesting to observe the magnitude of changes in both black and grey curves despite the ticket workload remaining constant throughout the sensitivity analyses. Consequently, the impact of governance policy choices on the goal realization is very pronounced. In this case, with the given distribution and frequency of ticket inflow, a value close to 0.3 yields the best SLA compliance. In comparison, a value of -0.7 for B is better suited to minimize the overall resource costs.

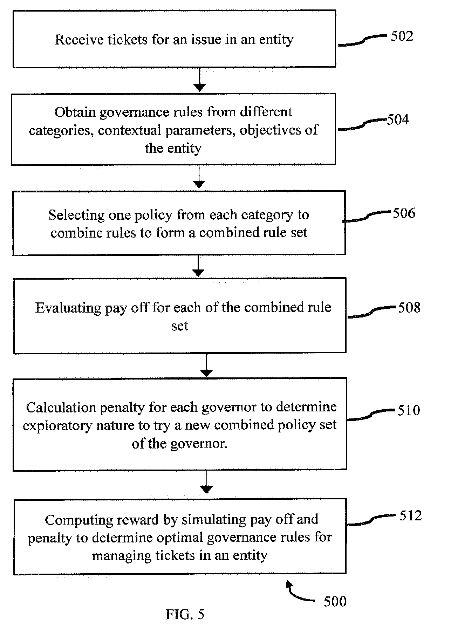

FIG. 5 is a flow chart illustrating a method for determining optimal governance rules for managing tickets in an entity, according to some embodiment of the present subject matter. At block 502, one or more tickets are received for one or more corresponding issues in an entity. Further at block 504, governance rules from different categories namely assignment rules, pre-emption rules and escalation rules, contextual parameters and objectives of an entity are obtained. Subsequently at block 506, at least one rule from each category of rules is selected to form one or more combined rule set. Subsequently at block 508, pay-off is calculated for each of the combined rule set. Further at block 510, penalty is calculated for each governor to examine the exploratory nature of the governor to try a new combined rule set. Further at block 512, reward is calculated by simulating the pay-off and penalty to determine the optimal governance rules for managing tickets in an entity.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant arts based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope and spirit of disclosed embodiments being indicated by the following claims.

**Claims**

1. A method for determining optimal governance rules for managing tickets in an entity, the method comprising of:

   receiving one or more tickets related to an issue in the entity;
   obtaining (i) one or more assignment rules, preemption rules and escalation rules, (ii) contextual parameters and (iii) one or more objectives based on the tickets received in the entity;
   selecting and combining at least one rule from the one or more of the assignment rules, preemption rules and escalation rules and to obtain one or more combined rule sets.
   calculating a pay-off for each of the one or more combined rule sets;
   determining an average combined rule set that is compliant with SLA and minimum effort spent by one or more resources based on the calculated pay off;
   calculating a penalty for each governor based on quantifier for varying exploratory nature of the governor (B), weightage for SLA compliance and efforts spent (L) and window size to determine an exploratory nature of a governor to explore a combined rule set; and
   computing reward for each of the one or more combined rule sets to determine an optimal governance rule set by simulating the pay-off and the penalty.

2. The method according to claim 1, wherein the pay-off of the combined rule set is a composite function of non-compliance of SLA and aggregate effort spent by the one or more resources.

3. The method according to claim 1, wherein an optimizer is utilized on the simulated pay off and the simulated penalty to determine the optimal governance rule set.

4. A system for determining optimal governance rules for managing tickets in an entity:

   at least one processor; and
   a memory communicatively coupled to the at least one processor, wherein the memory comprises
   an optimal governance rules module (106) to :

      receive one or more tickets related to an issue in the entity;
      obtain (i) one or more assignment rules, preemption rules and escalation rules, (ii) contextual parameters and (iii) one or more objectives based on the tickets received in the entity;
      select and combine at least one rule from one or more of the assignment rules, preemption rules and escalation rules and to obtain one or more combined rule sets.
      calculate a pay-off for each of the one or more combined rule sets;

determine an average combined rule set that is compliant with SLA and minimum effort spent by one or more resources based on the calculated pay off;

calculate a penalty for each governor based on quantifier for varying exploratory nature of the governor (B), weightage for SLA compliance and efforts spent (L) and window size to determine an exploratory nature of a governor to explore a combined rule set; and

compute reward for each of the one or more combined rule sets to determine an optimal governance rule set by simulating the pay-off and the penalty.

5. The system according to claim 4, wherein the pay-off of a combined rule set is a composite function of non-compliance of SLA and aggregate effort spent by the one or more resources.

6. The system according to claim 4, wherein an optimizer is utilized on the simulated pay off and the simulated penalty to determine the optimal governance rule set.

7. A non-transitory computer readable medium embodying a program executable in a computing device for provisioning network services in a heterogeneous cloud computing environment, the program comprising:

a program code for receiving, one or more tickets related to an issue in the entity;

obtaining (i) one or more assignment rules, preemption rules and escalation rules, (ii) contextual parameters and (iii) one or more objectives based on the tickets received in the entity;

selecting and combining at least one rule from the one or more of the assignment rules, preemption rules and escalation rules and to obtain one or more combined rule sets.

calculating a pay-off for each of the one or more combined rule sets;

determining an average combined rule set that is compliant with SLA and minimum effort spent by one or more resources based on the calculated pay off;

calculating a penalty for each governor based on quantifier for varying exploratory nature of the governor (B), weightage for SLA compliance and efforts spent (L) and window size to determine an exploratory nature of a governor to explore a combined rule set; and

computing reward for each of the one or more combined rule sets to determine an optimal governance rule set by simulating the pay-off and the penalty.

System <u>100</u>

Processor(s) <u>102</u>

Memory <u>104</u>

Optimal governance rules module <u>106</u>

Interface (s) <u>108</u>

100

FIG. 1

GOVERNOR/ MANAGER

RULES

RESOURCES

USES

RESOLVES

KEDB AGENT

UPDATES

TICKETS

FIG. 2

FIG. 3

FIG. 4

```
┌─────────────────────────────────────────────┐
│     Receive tickets for an issue in an entity │ ──── 502
└─────────────────────────────────────────────┘
                      │
                      ▼
┌─────────────────────────────────────────────┐
│     Obtain governance rules from different    │ ──── 504
│ categories, contextual parameters, objectives of │
│                  the entity                    │
└─────────────────────────────────────────────┘
                      │
                      ▼
┌─────────────────────────────────────────────┐
│     Selecting one policy from each category to │ ──── 506
│     combine rules to form a combined rule set  │
└─────────────────────────────────────────────┘
                      │
                      ▼
┌─────────────────────────────────────────────┐
│    Evaluating pay off for each of the combined rule │ ──── 508
│                      set                       │
└─────────────────────────────────────────────┘
                      │
                      ▼
┌─────────────────────────────────────────────┐
│ Calculation penalty for each governor to determine │ ──── 510
│ exploratory nature to try a new combined policy set │
│                of the governor.                │
└─────────────────────────────────────────────┘
                      │
                      ▼
┌─────────────────────────────────────────────┐
│  Computing reward by simulating pay off and    │ ──── 512
│ penalty to determine optimal governance rules for │
│         managing tickets in an entity          │
└─────────────────────────────────────────────┘
                                          ─── 500
```

FIG. 5

Europäisches
Patentamt

European
Patent Office

Office européen
des brevets

## EUROPEAN SEARCH REPORT

Application Number

EP 16 19 1257

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/106165 A1 (RAI VEERENDRA KUMAR [IN] ET AL) 16 April 2015 (2015-04-16) * Paragraphs 3-5, 27-40; figures; tables * | 1-7 | INV. G06Q10/06 G06Q10/00 |
| X | US 2010/057519 A1 (DORAI CHITRA [US] ET AL) 4 March 2010 (2010-03-04) * paragraph [0023] - paragraph [0026]; figures * * paragraph [0031] - paragraph [0060] * | 1-7 | |
| A | US 2011/131245 A1 (HUANG CHIN-YUNG [US] ET AL) 2 June 2011 (2011-06-02) * Paragraphs 17, 26-34, 52-58; figures * | 1-7 | |

TECHNICAL FIELDS
SEARCHED       (IPC)

G06Q

The present search report has been drawn up for all claims

| Place of search | Date of completion of the search | Examiner |
|---|---|---|
| Munich | 2 February 2017 | Blackley, William |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.........................................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 16 19 1257

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2017

| Patent document cited in search report | | Publication date | Patent family member(s) | | Publication date |
|---|---|---|---|---|---|
| US 2015106165 | A1 | 16-04-2015 | EP | 2863345 A1 | 22-04-2015 |
| | | | US | 2015106165 A1 | 16-04-2015 |
| US 2010057519 | A1 | 04-03-2010 | NONE | | |
| US 2011131245 | A1 | 02-06-2011 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 3695MUM2015